# EUROPÄISCHE PATENTSCHRIFT

(11) **EP 0 661 774 B1**
(45) Veröffentlichungstag und Bekanntmachung des Hinweises auf die Patenterteilung: **30.12.1998**
(21) Anmeldenummer: 94118391.5
(22) Anmeldetag: 23.11.1994
(51) Int. Cl.: H01R 4/70, H01R 4/22

(54) **Selbstklebendes Isolationsetikett**
Self-adhesive insulating label
Etiquette isolante et autocollante

(30) Priorität: 04.12.1993 DE 9318575 U
(43) Veröffentlichungstag der Anmeldung: 05.07.1995
(73) Patentinhaber: Beiersdorf Aktiengesellschaft, 20245 Hamburg (DE)
(72) Erfinder: Reichenbecher, Wolfgang, D-22399 Hamburg (DE)

(56) Entgegenhaltungen:
- US-A- 2 694 747
- US-A- 3 742 123
- US-A- 3 838 206

## Beschreibung

Die Erfindung betrifft ein selbstklebendes Isolationsetikett, das insbesondere für die Isolation von zwei Litzen bei Autokabelsätzen geeignet ist.

Sollen zwei Litzen bei Autokabelsätzen elektrisch miteinander verbunden werden, so muß diese metallisch blanke Verbindung elektrisch isoliert werden, damit im kompletten Kabelsatz diese Verbindungsstelle keinen elektrischen Kontakt zur Autokarrosserie hat. Innerhalb eines Autokabelbaums gibt es viele solcher elektrischen Verbindungen.

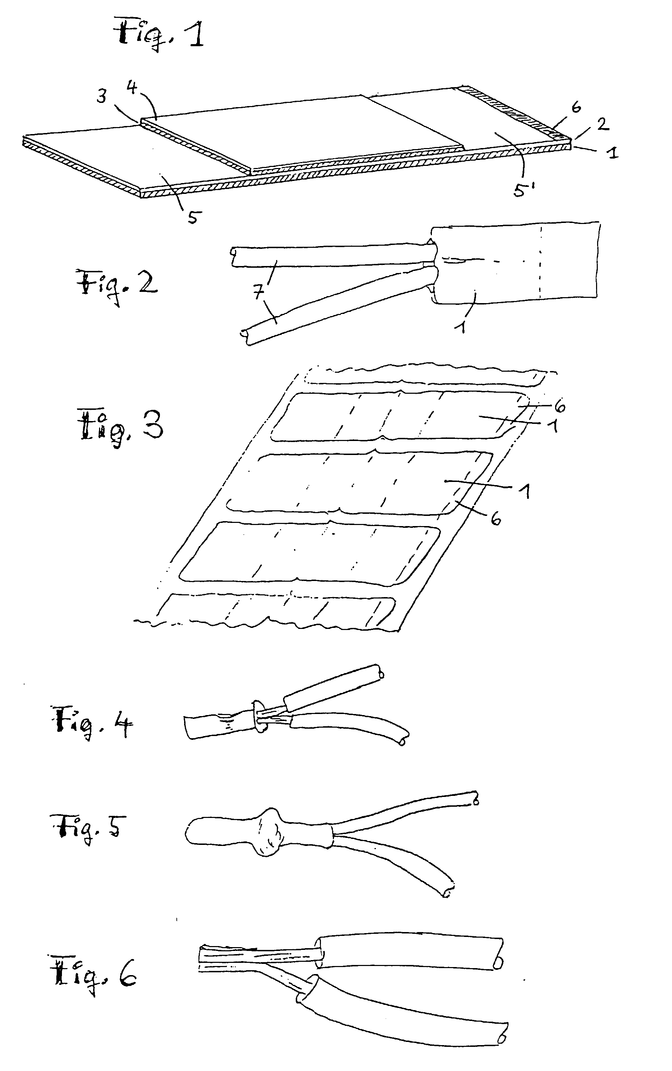

Bei der bisherigen Arbeitsweise werden zwei entisolierte Litzen in eine sogenannten Quetschhülse gesteckt. Diese Quetschhülse wird dann in einer entsprechenden Vorrichtung zusammengequetscht (Fig. 4). Dadurch entsteht eine elektrisch zuverlässige Verbindung, weil im Bereich des Quetschens eine Kaltverschweißung stattfindet.

Um diese elektrische Quetschverbindung zu isolieren, wurde bisher über diese Verbindung eine Schrumpftülle geschoben und diese dann mit Heißluft angeschrumpft (Fig. 5). Dadurch, daß die übergeschobene Quetschhülse einen Kragen hat, schrumpft sich die Schrumpftülle so über die elektrische Verbindung, daß durch die Hinterschneidung die Schrumpfhülse nicht wieder herunterfallen kann.

Derartige Verbindungen sind aus US-A-3838206 bekannt.

Um schneller arbeiten zu können, und weil es inzwischen entsprechende Maschinen gibt, läßt man bei der elektrischen Verbindung von zwei Litzen neuerdings die Quetschhülse weg. Es gibt entsprechende Maschinen, die ohne diese Hülse auskommen und wo in eine entsprechende Vorrichtung die entisolierten Litzen direkt eingeführt werden. Durch ein entsprechendes Verfahren werden ohne Zuhilfenahme der Quetschhülse die beiden Litzen miteinander verschweißt.

Bei dieser Art Verbindung (Fig. 6) kann die Isolation mit Hilfe einer Schrumpftülle nicht angewandt werden. Da die Hinterschneidung der Quetschhülse nicht vorhanden ist, rutscht nach einer gewissen Zeit und nach entsprechender mechanischer Beanspruchung diese Hülse wieder herunter. Es ist also keine zuverlässige Isolation durchführbar.

US-A-2694747 und US-A-3742123 Zeigen weitere isolierende Verbindungen gemäß stand der Tecknik.

Aufgabe der Erfindung ist es, hier und in ähnlich gelagerten Fällen Abhilfe zu schaffen, insbesondere ein einfach anwendbares und ohne Maschineninvestition für den Anwender einsetzbares Isolationssystem zu schaffen.

Demgemäß betrifft die Erfindung ein selbstklebendes Isolationsetikett, wie dies in den Ansprüchen näher angegeben ist. Es gestattet dies, verschweißte Litzen, wie in Fig. 6 dargestellt, ohne Quetschhülse zuverlässig zu isolieren, ohne daß die Isolation nach mechanischer Beanspruchung ungewollt wieder entfernt wird. Auch kann natürlich das Isolationsetikett bei der "alten" Methode mit Quetschhülse verwendet werden.

Ein solches Isolationsetikett besteht insbesondere aus einem selbstklebenden Gewebe oder einem anderen stark klebenden mechanisch robusten Material, etwa 25 × 75 mm. Etwa mittig ist auf diesem Etikett ein ebenfalls selbstklebendes Isolationsklebeband aufgebracht (Fig. 1). In dieser Kombination hat das Isolationsetikett folgende Aufgaben: Das breite Stück übernimmt den mechanischen Schutz und die Befestigung auf dem Kabel, während das von unten aufgelegte Elektroisolierband elektrische Isolationseigenschaften hat (z.B. tesafilm 4107(R) mit einer Durchschlagsfestigkeit von 5000 Volt).

Im einzelnen zeigen
- Fig. 1: eine Prinzipskizze eines erfindungsgemäßen Isolationsetiketts,
- Fig. 2: seine Anwendung,
- Fig. 3: seine vorteilhafte Lieferung auf Trennpapier,
- Fig. 4: zwei entisolierte Litzen mit Quetschhülse,
- Fig. 5: die Anordnung gemäß Fig. 4 mit aufgeschrumpfter Schrumpftülle, und
- Fig. 6: zwei entisolierte und verquetschte Litzen.

In Fig. 1 ist ein erfindungsgemäßes Isolationsetikett dargestellt, mit Trägermaterial 1, Selbstklebemasse 2 darauf, und darauf wiederum einer Isolierfolie 3, auf deren nach außen offenliegender Seite wiederum eine Selbstklebemasse 4 angeordnet ist. Endbereiche 5 und 5' der Selbstklebemasse 2 liegen frei, um aufeinander verklebt zu werden.

Vorteilhaft werden die Isolationsetiketten, wie in Fig. 3 dargestellt, fortlaufend auf Trennpapier geliefert. An einer Seite ist ein Anfasser 6 untergelegt, d.h. in diesem Bereich ist die Klebmasse neutralisiert. Dadurch sind die einzelnen Etiketten leichter und schneller vom Trennpapier abzunehmen.

Die einzelnen Etiketten werden beim Isolationsvorgang der zu verbindenden Litzen von dem Trennpapier abgenommen. Ein Etikett wird dann so über die metallisch blanken, verschweißten Litzenenden gelegt, daß das mittig aufgelegte Isolationsklebeband den metallisch blanken Teil der Quetschverbindung schützt, während der überstehende Etikettenanteil auf die Isolation der Litzen geklebt wird (Fig. 2).

Vorteile der Isolationsverbindung sind:
Die Isolation sitzt sofort nach dem Überkleben fest. Außerdem ist kein Schrumpfvorgang notwendig.

Der Aufbau von Iso-Pocket (R) ist vorteilhaft so ausgelegt, daß das Grundmaterial mechanische Schutzfunktion hat, hier kann also ein Gewebe, Polyestervlies, PE, PP eingesetzt werden ohne elektrische Isolationseigenschaften. Mittig wird dann ein Klebeband mit Isolationseigenschaften eingesetzt, z.B. tesafilm 4107 (R), der aus einer 25µ Polyesterfolie besteht mit einer Selbstklebemasse, die im Zusammenhang mit Kupfer nicht zu Korrosion führt.

## Patentansprüche

1. Selbstklebendes Isolationsetikett
mit einem robusten Trägermaterial (1) und
einer darauf einseitig beschichteten stark klebenden Selbstklebemasse (2),
einer mittig auf diesem mit Selbstklebemasse (2) beschichteten Trägermaterial (1) aufgeklebten Isolierfolie (3),
auf der wiederum eine Selbstklebemasse (4) beschichtet ist, wobei
beidseits der Isolierfolie (3) Endbereiche (5, 5') des mit Selbstklebemasse (2) beschichteten Trägermaterials (1) freiliegen.

2. Isolationsetikett nach Anspruch 1 wobei es an einem Ende einen Anfasser (6) aufweist.

3. Isolationsetikett nach Anspruch 1 wobei die Selbstklebemasse (4) eine solche ist, die nicht zur Korrosion von Kupfer führt, wie ein wärmehärtender Kautschukkleber.

4. Isolationsetikett nach Anspruch 1 wobei das Trägermaterial (1) ein solches ist, das gegen mechanische Beanspruchung Schutz gewährt, wie ein Gewebe, Polyestervlies oder eine Folie aus Polyethylen oder Polypropylen.

5. Isolationsetikett nach Anspruch 1 wobei die Isolierfolie (3) eine solche aus Polyester ist.

## Claims

1. Self-adhesive insulating label with a robust backing material (1) and a strongly adhesive self-adhesive composition (2) coated on one side of the latter, an insulating film (3) adhesively attached on this backing material (1) coated with self-adhesive composition (2), on which insulating film there is in turn coated a self-adhesive composition (4), end regions (5, 5') of the backing material (1) coated with self-adhesive composition (2) on both sides of the insulating film (3) being exposed.

2. Insulating label according to Claim 1, the said label having a grip tab(6) at one end.

3. Insulating label according to Claim 1, the self-adhesive composition (4) being a composition which does not lead to the corrosion of copper, such as a thermocuring rubber adhesive.

4. Insulating label according to Claim 1, the backing material (1) being a material which provides protection against mechanical stress, such as a woven fabric, polyester nonwoven or a film of polyethylene or polypropylene.

5. Insulating label according to Claim 1, the insulating film (3) being a film of polyester.

## Revendications

1. Etiquette isolante auto-adhésive
ayant un matériau de support robuste (1), et une masse auto-adhésive (2), fortement adhérente,
appliquée sur ce dernier d'un côté,
une feuille isolante (3), collée de manière centrale sur ce matériau de support (1) revêtu de la masse auto-adhésive (2),
sur laquelle est à nouveau appliquée une masse auto-adhésive (4),
les zones terminales (5, 5') du matériau de support (1) revêtu de la masse auto-adhésive (2) des deux côtés de la feuille isolante (3) étant dégagées.

2. Etiquette isolante selon la revendication 1, celle-ci présentant à une extrémité une languette de prise (6).

3. Etiquette isolante selon la revendication 1, la masse auto-adhésive (4) étant telle qu'elle ne conduise pas à la corrosion du cuivre, comme cela est le cas pour un adhésif au caoutchouc durcissant à la chaleur.

4. Etiquette isolante selon la revendication 1, le matériau de support (1) étant tel qu'il garantisse une protection contre les sollicitations mécaniques, comme un matériau tissé, un matériau non-tissé de polyester ou une feuille de polyéthylène ou de polypropylène.

5. Etiquette isolante selon la revendication 1, la feuille isolante (3) étant une feuille en polyester.
